# EUROPEAN PATENT SPECIFICATION

(11) **EP 2 782 359 B1**
(45) Date of publication and mention of the grant of the patent: **13.06.2018**
(21) Application number: 12849491.1
(22) Date of filing: 12.11.2012
(51) Int. Cl.: F24F 11/02, G08C 17/02

(54) **AIR CONDITIONER AND REMOTE CONTROL**
KLIMAANLAGE UND FERNSTEUERUNG
APPAREIL DE CONDITIONNEMENT D'AIR ET TÉLÉCOMMANDE

(30) Priority: 16.11.2011 JP 2011251161
(43) Date of publication of application: 24.09.2014
(73) Proprietor: Fujitsu General Limited, Kawasaki-shi Kanagawa 213-8502 (JP)
(72) Inventor: KAWAI, Tomofumi, Kawasaki-shi Kanagawa 213-8502 (JP)
(74) Representative: Kreutzer, Ulrich
(86) International application number: PCT/JP2012/079234
(87) International publication number: WO 2013/073492

(56) References cited:
- WO-A2-2010/112972
- JP-A- H0 658 601
- JP-A- H05 296 546
- JP-A- 2004 340 567
- JP-A- 2004 340 567

## Description

### Field

The present invention relates to an air conditioning system and a remote controller configured such that a plurality of air conditioner bodies are operated by a plurality of remote controllers.

### Background

There have been known air conditioners configured such that one air conditioner body is operated by a plurality of remote controllers (see, for example, Patent Literature 1). In Patent Literature 1, one air conditioner body is operated by a plurality of remote controllers of an infrared ray system. One of the plurality of remote controllers performs operation, and transmits operation information to other remote controllers to make them display the present operation condition.

There have been known other air conditioning systems configured such that a plurality of air conditioner bodies are operated by a plurality of remote controllers (see, for example, Patent Literatures 2 and 3). In Patent Literature 2, when a plurality of air conditioner bodies are installed in one room, in order to separately operate the respective air conditioner bodies with one remote controller, an air conditioning unit that is an operation target is selected and operated. Patent Literature 3 relates to a multi-indoor-unit air conditioning system including one outdoor unit and a plurality of indoor units. To operate air conditioning unit(s) of other room(s) in the same manner as the air conditioning unit of its own room, the remote controllers and the air conditioner bodies are each provided with a transmitting/receiving unit for own room as well as a transmitting/receiving unit for other rooms.

### Citation List

### Patent Literature

Patent Literature 1: Japanese Laid-open Patent Publication No. 4-273944
Patent Literature 2: Japanese Laid-open Patent Publication No. 6-58601
Patent Literature 3: Japanese Laid-open Patent Publication No. 2004-340567

WO 2010/112972 A2 shows a method for selecting at least one device to be controlled by a radio frequency controller device, comprising arranging a plurality of controllable devices into a plurality of groups, determining at least one link quality value for at least one device associated with the plurality of groups, calculating a proximity factor for the plurality of groups of controllable devices based at least partly on the determined at least one link quality value, comparing proximity factors for the plurality of groups of and selecting the group of controllable devices comprising a favorable proximity factor to be controlled by the radio frequency controller device.

### Summary

### Technical Problem

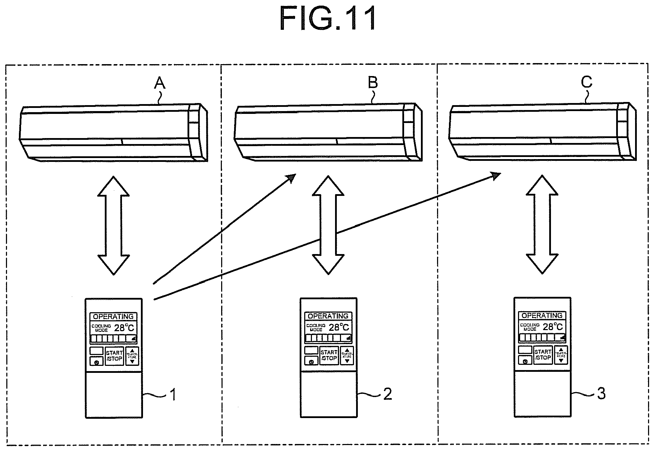

As illustrated in FIG. 11, an air conditioner includes air conditioning units A, B, and C of general home use and not a multi-model type, being installed in three rooms, to which remote controllers 1, 2, and 3 respectively correspond, there is a case where the air conditioning units A, B, and C may completely be identical to each other in terms of basic control contents and may be different only in air-conditioning capacity. When an RF remote controller (remote controller of a radio frequency wireless communication system) is used as a remote controller, a signal transmitted from one remote controller, such as a remote controller 1, may reach the air conditioning units B and C, and the air conditioning units B and C may be operated against the intension of a user. Accordingly, paring setting is usually performed to pair, for example, the air conditioning unit A and the remote controller 1, thereby the air conditioning unit operated by the remote controller is limited.

Since the basic control contents are completely identical in the air conditioning unit A, B, and C, it is convenient if the air conditioning units B and C of others rooms can be operated with one remote controller 1. For example, assuming that the user is in a living room, and while staying in the living room, if the user can start in advance an air conditioning unit in a room (bedroom) that the user is going to move to, and/or if the user can set temperature of an air conditioning unit of a child's room, it becomes unnecessary for the user to take the trouble to leave the living room. However, if all of the air conditioning units can be operated with one remote controller, it is hard to operate one of the air conditioning units as a target air conditioning unit unless the operational state of the target air conditioning unit immediately before operation is recognized.

The present invention has been made in view of the above circumstances, and an object of the present invention is to provide an air conditioner and a remote controller configured such that a plurality of air conditioner bodies can be operated with a plurality of remote controllers and the operational state of the air conditioner body immediately before operation can be recognized.

### Solution to Problem

According to an aspect of the present invention, an air conditioning system is defined in claim 1.

According to another aspect of the present invention, in the sub-machine operation mode, each of the remote controllers can operate one arbitrary sub machine or can collectively operate all the apparatus bodies registered as the sub machine.

According to another aspect of the present invention, each of the air conditioner bodies includes a display unit to be turned on when each of the air conditioner bodies is operated with the remote controller that is set as the sub machine.

According to an aspect of the present invention, a remote controller is defined in claim 5.

### Advantageous Effects of Invention

An air conditioning system according to the present invention includes: a plurality of air conditioner bodies that perform air-conditioning operation; a plurality of remote controllers that operate the air conditioner bodies respectively; and pairing-setting unit that pairs each of the plurality of air conditioner bodies and each of the plurality of remote controllers. The pairing-setting unit has a main-machine registration function that registers a pair of an air conditioner body out of the plurality of air conditioner bodies and a remote controller out of the plurality of remote controllers as a main machine, and a sub machine registration function that registers the air conditioner body, which is registered as the main machine out of the plurality of air conditioner bodies, and other remote controller out of the plurality of remote controllers which is not registered as the main machine, as a sub machine. After registration of the main machine and the sub machine by the pairing-setting unit, a mode of operating the air conditioner body that is the main machine with the remote controller is defined as a main-machine operation mode, while a mode of operating an air conditioner body other than the air conditioner body that is the main machine, namely, the air-conditioner body that is the sub machine with the remote controller is defined as a sub-machine operation mode. When the main-machine operation mode is switched to the sub-machine operation mode, the remote controller acquires operation information of all the air conditioner bodies registered as the sub machine, which results in an effect that recognition of the operational state of the air conditioner body immediately before operation is possible.

### Brief Description of Drawings

FIG. 1 is a schematic diagram illustrating an embodiment of an air conditioning system according to the present invention.
FIG. 2 is a front view illustrating one example of a remote controller according to the present invention.
FIG. 3 is a block diagram of the air conditioning system according to the present invention.
FIG. 4 illustrates an operation unit and an LED display unit of an air conditioning unit.
FIG. 5A illustrates a pairing-setting procedure 1 in main machine registration.
FIG. 5B illustrates a pairing-setting procedure 2 in main machine registration.
FIG. 5C illustrates a pairing-setting procedure 3 in main machine registration.
FIG. 5D illustrates a pairing-setting procedure 4 in main machine registration.
FIG. 6 illustrates a pairing-setting procedure in sub machine registration.
FIG. 7 is an explanatory diagram illustrating other room operation in a sub-machine operation mode.
FIG. 8A illustrates an example of an initial screen of a liquid crystal display unit immediately after the mode is shifted to the sub-machine operation mode.
FIG. 8B illustrates an example of the initial screen of the liquid crystal display unit immediately after the mode is shifted to the sub-machine operation mode.
FIG. 8C illustrates an example of the initial screen of the liquid crystal display unit immediately after the mode is shifted to the sub-machine operation mode.
FIG. 9 illustrates changes in screen of the liquid crystal display unit in the sub-machine operation mode.
FIG. 10A illustrates an example of an operation content selection screen in the sub-machine operation mode.
FIG. 10B illustrates an example of the operation content selection screen in the sub-machine operation mode.
FIG. 10C illustrates an example of the operation content selection screen in the sub-machine operation mode.
FIG. 11 is a diagram illustrating correspondence relation between a plurality of air conditioning units and a plurality of remote controllers.

### Description of Embodiment

Hereinafter, an embodiment of the air conditioner and a remote controller according to the present invention will be described in detail with reference to the accompanying drawings. It should be understood that this embodiment is not intended to limit the present invention.

### [Schematic configuration of air conditioning system]

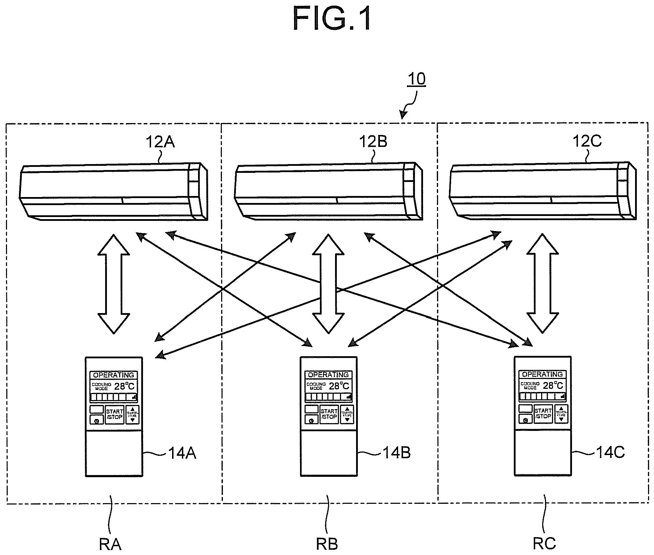

First, the schematic configuration of the air conditioning system according to the present invention will be described. As illustrated in FIG. 1, an air conditioning system 10 according to the present invention includes: air conditioner bodies made up of indoor units (hereinafter referred to as air conditioning units) 12A, 12B, and 12C installed in a plurality of rooms RA, RB, and RC and outdoor units, not illustrated, corresponding to the respective indoor units; and remote controllers 14A, 14B, and 14C. The air conditioning units 12A, 12B, and 12C have the same functions, while the remote controllers 14A, 14B, and 14C also have the same functions.

By using bidirectional radio communication with RF modules, the air conditioning system 10 can perform remote control and various settings of each of the air conditioning units 12A to 12C by, for example, the remote controller 14A. The remote controller 14A also has a memory, not illustrated, which stores various operation information sent from the air conditioning units 12A to 12C, and a liquid crystal display unit 34A that displays the operation information. When the remote controller 14A acquires various operation information from the air conditioning units 12A to 12C, the remote controller 14A stores and displays the acquired operation information as new operation information to be used for operation management and/or various settings. The remote controller 14A has an external connection terminal, not illustrated, via which the remote controller 14A can be connected to a personal computer, not illustrated, by wired connection, to transmit the acquired various operation information to the personal computer, so that operation information management can be performed on the personal computer. This applies to other remote controllers 14B and 14C.

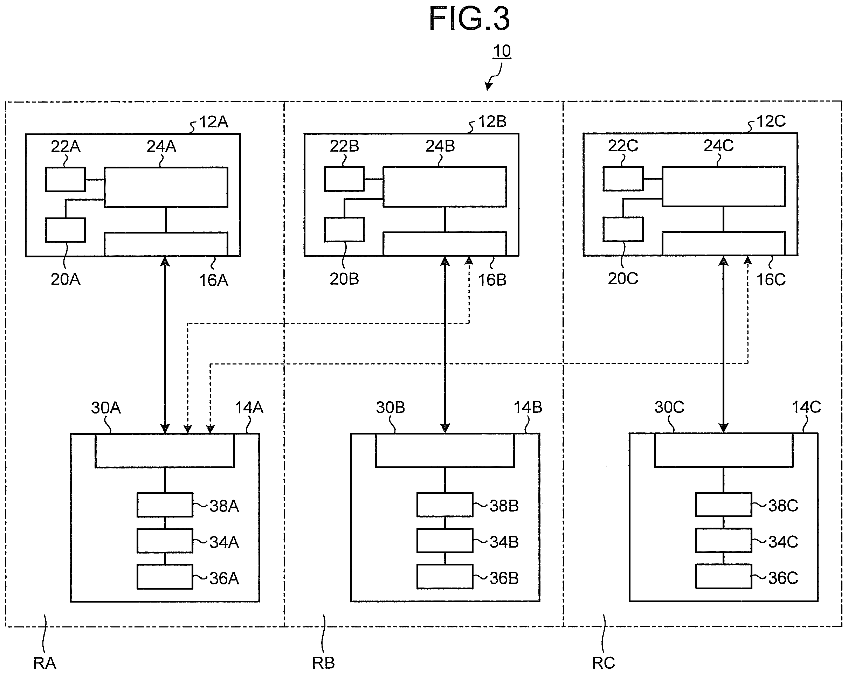

As illustrated in FIG. 3, the air conditioning units 12A to 12C have transmitting/receiving units 16A to 16C formed of RF modules which perform bidirectional radio communication with the remote controllers 14A to 14C, LED display units 20A to 20C, operation units 22A to 22C, and control units 24A to 24C that control these components, respectively. The control units 24A to 24C control the transmitting/receiving units 16A to 16C, the LED display units 20A to 20C, and the operation units 22A to 22C in the air conditioning units 12A to 12C based on operation signals received from the remote controllers 14A to 14C, and calculate operation time and power consumption (electricity charges) based on data on current operation information of the air conditioning units 12A to 12C and a history of the operation information. The control units 24A to 24C also include memories, not illustrated, which store data for a fixed period of time (for example, one month).

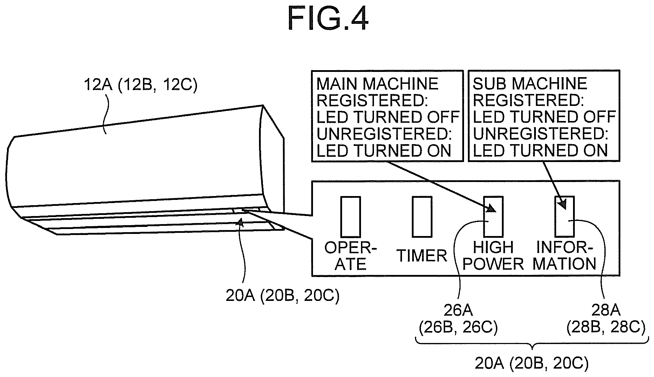

As illustrated in FIG. 4, the LED display units 20A to 20C have LEDs 26A to 26C for main machine, and LEDs 28A to 28C for sub machine. The respective LEDs are controlled by the control units 22A to 22C to be turned off when the respective air conditioning units are registered and to be turned on when the respective air conditioning units are unregistered. The operation units 24A to 24C have a pairing registering button, not illustrated, for use in registering the respective air conditioning units in the remote controllers 14A to 14C as a main machine or as a sub machine.

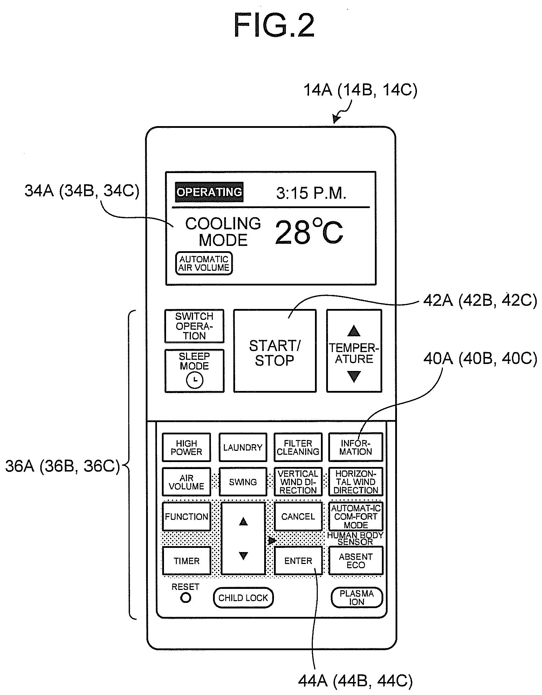

As illustrated in FIGS. 2 and 3, the remote controllers 14A to 14C have transmitting/receiving units 30A to 30C formed of RF modules which perform bidirectional radio communication with the transmitting/receiving units 16A to 16C of the air conditioning units 12A to 12C, liquid crystal display units 34A to 34C which display operation information (operation time, power consumption, etc.) of the air conditioning units, operation units 36A to 36C which operate the air conditioning units, and control units 38A to 38C which control these components, respectively. The operation units 36A to 36C are each used to select a paired air conditioning unit of own room or an air conditioning unit of another room, so that bidirectional radio communication can be performed with each air conditioning unit. The transmitting/receiving units 30A to 30C of the remote controllers are usually turned off to prevent consumption of batteries in use. Therefore, communication between the remote controller and the air conditioning unit is always started after an operation signal is transmitted from the remote controller to the air conditioning unit that is an operation target.

Although not illustrated, the control units 24A to 24C of the air conditioning units and the control units 38A to 38C of the remote controllers are each configured to include pairing-setting unit. The pairing-setting unit has a main machine registration function that registers a pair of, for example, the air conditioning unit 12A and the remote controller 14A as a main machine (for own room), out of the plurality of air conditioning units 12A to 12C and the plurality of remote controllers 14A to 14C. The pairing-setting unit also has a sub machine registration function that registers the air conditioning units 12B and 12C, which are registered as a main machine in other remote controllers 14B and 14C, as a sub machine (for other rooms for example), out of other air conditioning units 12B and 12C. The pairing-setting unit can register, for example, one pair out of the plurality of air conditioning units 12A to 12C and the plurality of remote controllers 14A to 14C, as a main machine, while registering at least one of the remaining pairs as a sub machine.

In the air conditioning system 10, bidirectional radio communication is performed with use of RF modules between the above-mentioned remote controllers and air conditioning units. When there is an air conditioning unit of another model in the vicinity of the operation target machine, it becomes impossible to distinguish the target machine. Accordingly, it is necessary to perform pairing-setting in advance.

### [Pairing-setting]

A description will now be given of the contents of processing (main machine registration function and sub machine registration function) in the control units 24A to 24C and 38A to 38C (pairing-setting unit) in the pairing-setting.

### (Main machine registration function)

A case of registering the air conditioning unit 12A in the remote controller 14A as a main machine will be described as an example.

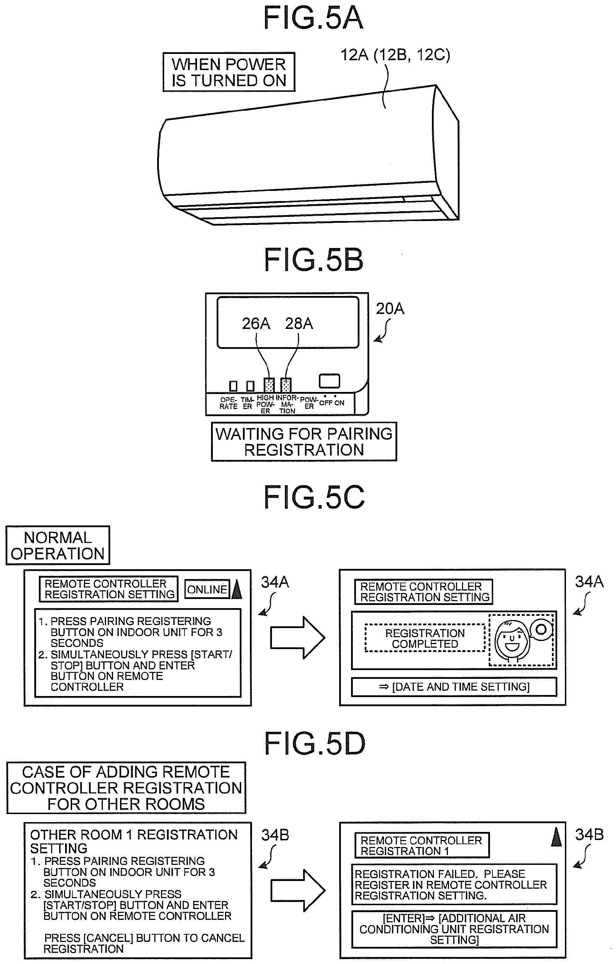

As illustrated in FIG. 5A, when power is turned on in the air conditioning unit 12A while main machine registration is not yet completed, the control unit 24A detects the unregistered state, and turns on the LED 26A for main machine and the LED 28A for sub machine in the LED display unit 20A as illustrated in FIG. 5B to inform the user that the air conditioning unit is in the state of waiting for main machine registration. Thus the air conditioning unit 12A is automatically put in the state of waiting for pairing registration.

Next, when the remote controller 14A is loaded with a dry battery, or when any operation key of the remote controller 14A is pressed with the remote controller 14A being already loaded with a dry battery, the control unit 38A displays an initial setup screen for guiding main machine registration operation on the liquid crystal display unit 34A as illustrated in FIG. 5C. Usually, the user performs operation in accordance with the contents. For example, if a pairing registering button, not illustrated, which is provided in the operation unit 22A of the air conditioning unit, is pressed for 3 seconds, and then an start/stop button 42A and an enter button 44A of the remote controller are simultaneously pressed, the air conditioning unit 12A is registered in the remote controller 14A as a main machine. Once registration operation is completed, the control unit 24A performs control to turn off the LED 26A for main machine, and informs the user that the air conditioning unit 12A is already registered as a main machine but not yet registered as a sub machine.

Hereinafter, the pairing-setting will be described in detail.

First, when the registration setting of the remote controller 14A is selected, or when a pairing counterpart is not stored in a nonvolatile memory, not illustrated, which is mounted on the control unit 38A of the remote controller 14A, the remote controller 14A becomes a remote controller registration setting mode, so that a pairing display which indicates a procedure for pairing the remote controller 14A with the air conditioning unit 12A is displayed on the liquid crystal display unit 34A. Similarly, when pairing registration of the air conditioning unit 12A is not yet performed, the unregistered state is displayed in the LED display unit 20A provided to the air conditioning unit 12A. When an operator presses the pairing registering button, not illustrated, provided to the air conditioning unit 12A, the state of executing pairing operation is notified by sounding of a buzzer, lighting of a lamp, or the like. A pairing request signal of the air conditioning unit 12A is sent to a pairing target remote controller from the transmitting/receiving unit 16A, by which pairing operation is started.

If the start/stop button 42A and the enter button 44A in the operation unit 36A of the remote controller 14A illustrated in FIG. 2 are simultaneously pressed while the paring display is displayed on the liquid crystal display unit 34A of the remote controller 14A, a pairing request signal is sent from the transmitting/receiving unit 30A to the air conditioning unit 12A that is a pairing target, by which pairing operation is started. In the liquid crystal display unit 34A of the remote controller 14A, "now executing pairing registration" is displayed. Here, communication is established for pairing operation between the transmitting/receiving unit 30A of the remote controller 14A and the transmitting/receiving unit 16A of the air conditioning unit 12A to confirm whether they are of models registerable as a pair. If they are of models registerable as a pair, the remote controller 14A and the air conditioning unit 12A are paired. The transmitting/receiving unit 30A of the remote controller 14A transmits a pairing completion signal indicating that pairing is completed to the control unit 24A of the air conditioning unit 12A. At the same time, the transmitting/receiving unit 16A of the air conditioning unit 12A transmits a pairing completion signal indicating the paring is completed to the control unit 38A of the remote controller.

Next, an air-conditioning-unit-model information request is transmitted as general-purpose data from the remote controller 14A to the air conditioning unit 12A. In this case, the air-conditioning-unit-model information receivable from the air conditioning unit 12A includes a series name, a year of manufacture, a character string (model name expressed with 16 characters or less), and an air conditioning unit ID (MAC address). Upon reception of the air-conditioning-unit-model information request, the transmitting/receiving unit 16A of the air conditioning unit 12A transmits a general-purpose data transmission completion signal to the remote controller 14A to notify the success of transmission.

Next, the control unit 38A of the air conditioning unit 12A transfers the model information of the air conditioning unit to the remote controller 14A. When the remote controller 14A receives the model information of the air conditioning unit 12A, the transmitting/receiving unit 30A transmits an information transfer completion signal to the air conditioning unit 12A to notify the success of transmission.

Between the remote controller 14A and the air conditioning unit 12A which have been paired by the above-described pairing-setting, operation and various settings can be performed from the remote controller 14A to the air conditioning unit 12A. In addition, the remote controller 14A can request and thereby acquire an operation log (history) stored in the air conditioning unit 12A.

The pairing setting described above may apply to the case of pairing the air conditioning unit 12B and the remote controller 14B and/or the case of paring the air conditioning unit 12C and the remote controller 14C. The paring-setting may also apply to the case of pairing the air conditioning unit 12A and the remote controller 14C as a sub machine.

Meanwhile, when a main machine for the air conditioning unit 12A is not registered, if the user attempts to register the air conditioning unit 12A as a sub machine with use of the remote controller 14B having the air conditioning unit 12B registered as its main machine, the control unit 24A of the air conditioning unit 12A transmits a message that the main machine registration is incomplete to the remote controller 14B, as disclosed in FIG. 5D. Upon receiving the message that the air conditioning unit 12A is unregistered as a main machine, the remote controller 14B displays the content of a registration error and a content that prompts to register the air conditioning unit 12A as a main machine, on the liquid crystal display unit 34B to inform the user that the air conditioning unit 12A is unregistered as a main machine and therefore is not available for sub machine registration, as disclosed in FIG. 5D.

### (Sub machine registration function)

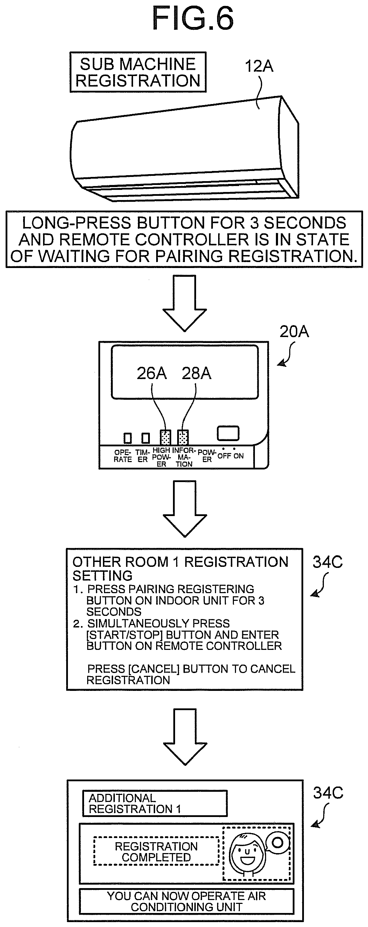

Next, in the case where, for example, the air conditioning unit 12A is already registered as a main machine, and the user registers the air conditioning unit 12A in another remote controller 14C as a sub machine, the user operates the remote controller 14C to display an initial setup screen for guiding registration operation of the air conditioning unit of another room on the liquid crystal display unit 34C as illustrated in FIG. 6. For example, in accordance with the display contents, if the pairing registering button in the operation unit 22A of the air conditioning unit is pressed for 3 seconds and then the start/stop button 42A and the enter button 44A of the remote controller are simultaneously pressed, the air conditioning unit 12A is registered in the remote controller 14C as a sub machine. Once registration is recognized, the control unit 24A performs control to turn off the LED 28A for sub machine, and informs the user that the air conditioning unit 12A has been registered as a main machine and as a sub machine. It goes without saying that the air conditioning unit 12A can be registered in still another remote controller as a sub machine.

In the case where the user attempts to register an air conditioning unit, which is in the state of waiting for sub machine registration, in another remote controller as a main machine, a content of a registration error and a content that prompts to register the air conditioning unit as a sub machine are displayed on the liquid crystal display unit of the remote controller as in the above-stated case to inform the user that the air conditioning unit is already registered as a main machine and therefore is not available for sub machine registration.

In the above-described pairing-setting, main machine and sub machine registration may be deleted by long-pressing the pairing registering button for, for example, about several tens of seconds.

Thus, in the control units 24A to 24C and 38A to 38C (pairing-setting unit) of the present embodiment, an air conditioning unit which is the first air conditioning unit that is paired with a remote controller is registered in the remote controller as a main machine and then another air conditioning unit which is paired with the same remote controller thereafter is registered as a sub machine. This order in pairing operation prevents the air conditioning units or the remote controllers from failing to be registered as a main machine.

Here, with respect to the air conditioning unit 12A and the remote controller 14A which are registered as a main machine, the air conditioning unit 12A, which is registered in the remote controller 14A, may be registered as a main body for the remote controller 14A, and the remote controller 14A, which is registered in the air conditioning unit 12A, may be registered as a main remote controller for the air conditioning unit 12A. With respect to the air conditioning unit 12B and the remote controller 14A which are registered as a sub machine, the air conditioning unit 12B, which is registered in the remote controller 14A, maybe registered as a sub body for the remote controller 14A, and the remote controller 14A, which is registered in the air conditioning unit 12B, may be registered as a sub remote controller for the air conditioning unit 12B.

More specifically, the pairing-setting unit included in the control units 38A to 38C of the remote controllers may be configured to have main body registration unit (or main body registration function) that registers one of a plurality of air conditioning units as a main body, and sub body registration unit (or sub body registration function) that registers at least one of other air conditioning units as a sub body. The pairing-setting unit included in the control units 24A to 24C of the air conditioning units may be configured to have main remote controller registration unit (or main remote controller registration function) that registers one of a plurality of remote controllers as a main remote controller, and sub remote controller registration unit (or sub remote controller registration function) that registers at least one of other remote controllers as a sub remote controller. The main body registration unit of a remote controller may register an air conditioning unit, while the main remote controller registration unit of the air conditioning unit may register the remote controller. Then, the sub body registration unit of the remote controller may register another air conditioning unit which is not registered in the remote controller as a main body, while the sub remote controller registration unit may register another remote controller which is not registered in this air conditioning unit as a main remote controller.

Or alternatively, when no main body is registered in the control units 38A to 38C of the remote controllers, execution of sub body registration may be omitted. By giving priority to registering the main machine or the main body over the sub machine or the sub body, pairing registration can be performed easily distinguishing the main machine from the sub machine.

When no main remote controller is registered in the control units 24A to 24C of the air conditioning units, execution of sub remote controller registration may be omitted. In this case, as in the above case, pairing registration can also be performed easily distinguishing the main machine from the sub machine.

### [Operation after pairing setting]

A description will now be given of operation after pairing setting.

First, in the present embodiment, after the main machine and sub machine registration by the control units 24A to 24C and 38A to 38C (pairing-setting unit), the number of the functions that can be performed from the remote controller to the sub machine is made less than the number of the functions that can be performed to the main machine.

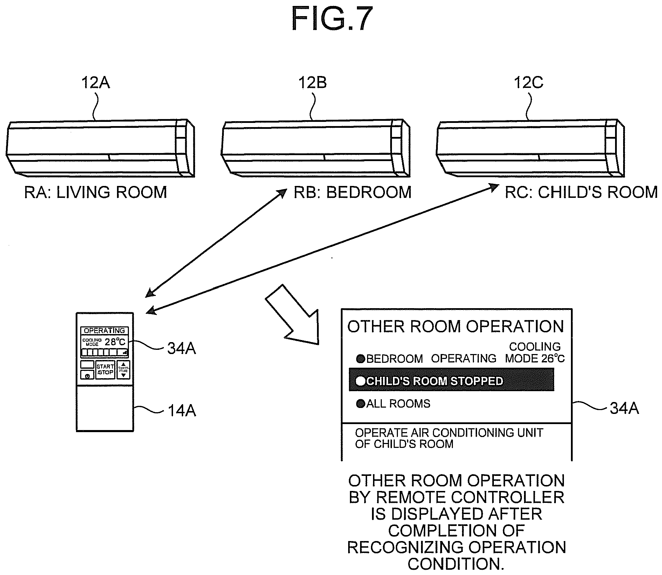

More specifically, as illustrated in FIG. 7, the remote controller 14A of the living room RA can perform basically all the operations for the air conditioning unit 12A registered as a main machine. However, the remote controller 14A can perform a limited number or limited types of functions for the air conditioning unit 12B of the bedroom RB and the air conditioning unit 12C of the child's room RC which are registered as a sub machine. For example, operations such as switching between cooling and heating are not allowed, and only start/stop and change in preset temperature are allowed. Details or contents of the functions may also be limited. For example, temperature range which the remote controller 14A can set may be limited.

By such limitation, if the user can perform only the function of, for example, start/stop during use of the remote controller, the user can easily notice that he/she is operating the air conditioning unit that is a sub machine of another room. Therefore, the user can easily identify the air conditioning unit as an operation target during remote controller operation. If all the functions can be operable regardless of the main machine and the sub machine, relation between the main machine and the sub machine becomes unclear, which makes it difficult to identify which air conditioning unit the user is currently operating. In the case of using RF remote controllers having a wide radio wave coverage as in the present embodiment in particular, limiting the number of functions operable for the sub machine is effective to enhance usability.

In the present embodiment, when the main machine or the sub machine is operated by the remote controllers 14A to 14C, the control units 38A to 38C of the remote controllers are configured to collectively transmit a control information signal (operation signal) for controlling the main machine and the sub machine to the main machine and the sub machine. The control units 24A to 24C of the main machine and the sub machine are configured to determine, based on identification information included in the received control information signal, whether or not the contents of operation are addressed to themselves.

When the control units 24A to 24C determine that the contents of operation are directed to themselves, they perform control to execute the contents of operation. When the control units 24A to 24C determine that the contents of operation are not directed to themselves, they neglect the contents of operation.

Since RF-type remote controllers are larger in power consumption than infrared ray-type remote controllers, the remote controller 14A and other remote controllers, not illustrated, are not always in a standby state to suppress battery consumption. Therefore, as illustrated in FIG. 7, in the case where the remote controller 14A and the air conditioning unit 12A, which is a main machine, are not synchronized at times other than a required time, changing the set contents of the air conditioning unit 12A by using another remote controller 14B, not illustrated, may cause the situation in which the operation information stored in the control unit 24A of the air conditioning unit 12A does not match the operation information stored in the control unit 38A of the remote controller 14A. In order to avoid such a situation, when an information button 40A (information switch, see FIG. 2) provided in the operation unit 36A of the remote controller 14A for confirmation of the operation information is pressed, the remote controller 14A acquires operation information from the air conditioning unit 12A as a main machine of the remote controller 14A, and the acquired operation information is stored and displayed as new operation information.

To acquire operation information, an operation signal is transmitted to the main machine registered in the remote controller. The main machine that received the signal transmits operation information to the remote controller, by which the operation information can be acquired. In other words, when the air conditioning unit, which is an operation target of the remote controller, receives an operation signal, the air conditioning unit transmits the operation information after receiving the operation signal to the remote controller. The remote controller which received the operation information stores the operation information of the air conditioning unit, which is an operation target, as new operation information. To prompt acquisition of operation information, a message "Press information button" may periodically displayed on the liquid crystal display unit of the remote controllers to inform the user of the contents of operation that the user should perform.

The air conditioning units 12A to 12C may be provided with an information display unit having an LED which is turned on when the air conditioning units 12A to 12C are operated as a main machine or a sub machine. The LED display units 20A to 20C of FIG. 4 may also serve as the information display unit. When the remote controller is used to operate its sub machine, the LED of the operated air conditioning unit or the sub machine is turned on so that the user can recognize that the air conditioning unit is operated as a sub machine. If the LED for main machine is turned on even though the user tried to operate a sub machine, the user can recognize that he/she performed an erroneous operation. When the user confirms lighting of the LED that is indicative of the main machine and recognizes the erroneous operation, he/she can press the information buttons 40A to 40C on the remote controllers so as to perform synchronization of the operation information between the remote controllers and their main machines. In this case, a cause of error and/or a result of synchronizing the operation information may be displayed on the liquid crystal display units 34A to 34C on the remote controllers.

### [Operation in sub-machine operation mode]

A description will now be given of the operation in the sub-machine operation mode.

In the present embodiment, a mode in which an air conditioning unit as a main machine is operated with a remote controller, after registration of the main machine and the sub machine by the control unit (pairing-setting unit) is performed, is defined as a main-machine operation mode (own-room operation mode), while a mode in which an air conditioning unit as a sub machine is operated with the remote controller is defined as a sub-machine operation mode (other-room operation mode). The main-machine operation mode and the sub-machine operation mode may be switched by operating a button in the operation unit of the remote controller.

For example, in FIG. 7, a mode shift from the main-machine operation mode to the sub-machine operation mode is instructed by operating a button on the remote controller 14A. At the time of the mode shift, the remote controller 14A acquires the operation information (information such as "in operation/not in operation", and "cooling/heating") of all the air conditioning units 12B and 12C registered in the remote controller 14A as a sub machine, and also displays a screen for other-room operation, in which acquired operation information is reflected, on the liquid crystal display unit 34A. Thus, the mode is shifted to the sub-machine operation mode.

In the sub-machine operation mode, all the air conditioning units registered in the remote controller as a sub machine are operable. Arbitrary sub machines may individually be operated or all the sub machines may collectively be operated. The user operates the operation unit 36A, not illustrated, to select a sub machine to operate while referring to the liquid crystal display unit 34A. On the right side of FIG. 7, a screen is exemplified in which the user can select an operation target from the air conditioning units (sub machines) of the bedroom, the child's room, and of all the rooms.

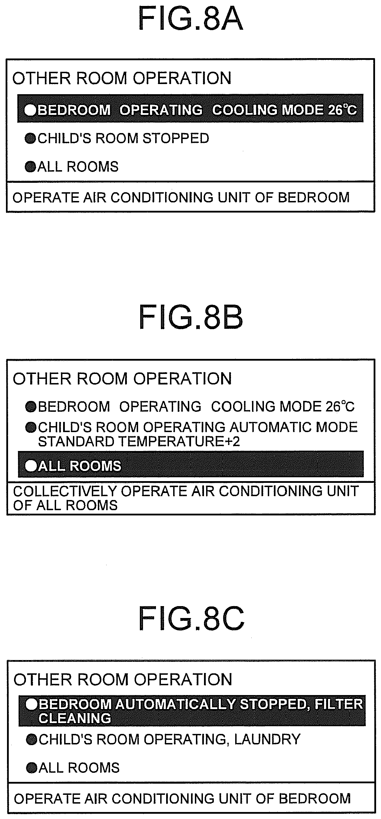

FIGS. 8A to 8C illustrate one example of initial screens displayed on the liquid crystal display unit 34A of the remote controller 14A immediately after mode shift to the sub-machine operation mode. In the mode shift to the sub-machine operation mode, the operation information acquired from all the sub machines is reflected on the operation information, so that the present operation conditions of the respective rooms (respective sub machines) are displayed. For example, FIG. 8A illustrates that the bedroom is in cooling operation with a preset temperature of 26°C, and operation in the child's room is stopped. Moving a cursor in the liquid crystal display unit enables operation of the air conditioning unit of the bedroom, and/or collective operation (for example, operation start/operation stop) of the air conditioning units of all the rooms.

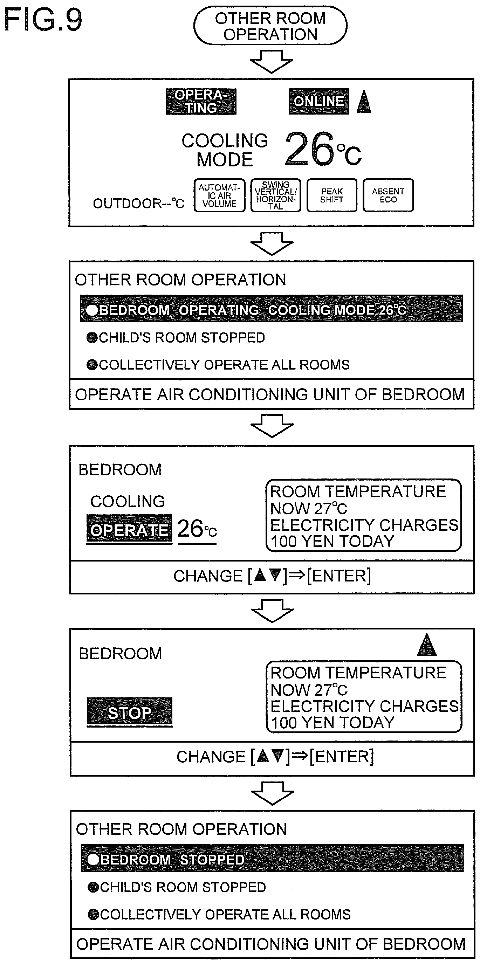

FIG. 9 is one example of a change in screen display in the liquid crystal display unit in the sub-machine operation mode. For example, when the other room operation is selected with an operation button in the operation unit of the remote controller, the screen display of the liquid crystal display unit changes in response to operation of the operation button by the user. When the bedroom is selected, the screen changes so that the contents of operation for the bedroom become selectable.

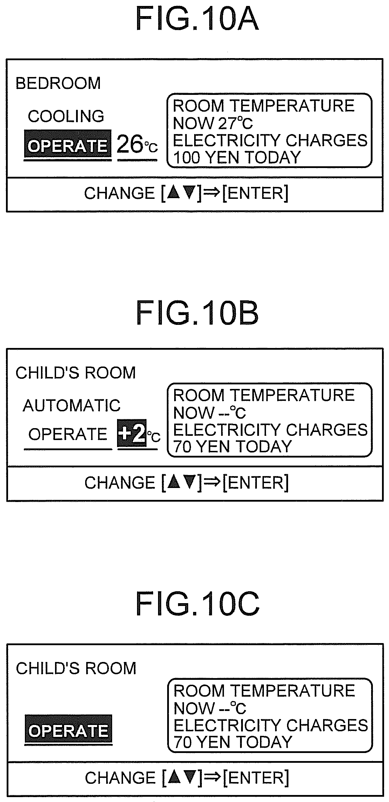

FIGS. 10A to 10C illustrate one example of operation content selection screens for the sub machine in the sub-machine operation mode. For example, when the air conditioning unit 12B of the bedroom is currently in cooling operation as illustrated in FIG. 10A, the set temperature may be changed only in the range of 18 to 30°C with use of the remote controller 14A. As illustrated in FIG. 10B, when the air conditioning unit 12C of the child's room is currently in automatic operation, the set temperature may be changed only in the range of standard temperature ±2°C with use of the remote controller 14A. As illustrated in FIG. 10C, when operation of the air conditioning unit 12C of the child's room is currently stopped, only the operation start may be performed with the remote controller 14A, and after the operation is started, the operation condition of the air conditioning unit 12C may be re-acquired.

As described in the foregoing, the air conditioning system according to the present invention includes: a plurality of air conditioner bodies that perform air-conditioning operation; a plurality of remote controllers that operate each of the air conditioner bodies; and pairing-setting unit that pairs each of the plurality of air conditioner bodies and each of the plurality of remote controllers. The pairing-setting unit has a main machine registration function that registers a pair of the air conditioner body and the remote controller, out of the plurality of air conditioner bodies and the plurality of remote controllers, as a main machine, and a sub machine registration function that registers the air conditioner body, which is registered as a main machine out of the plurality of air conditioner bodies, and the remote controller which is not registered as a main machine, as a sub machine. A mode of operating the air conditioner body, which is the main machine, with the remote controller after registration of the main machine and the sub machine by the pairing-setting unit is defined as a main-machine operation mode, while a mode of operating the air conditioner body, which is the sub machine, with the remote controller is defined as a sub-machine operation mode. When the main-machine operation mode is switched to the sub-machine operation mode, the remote controller receives and thereby acquires operation information of all the air conditioner bodies registered as a sub machine, which is transmitted from each of the air conditioner bodies. Accordingly, the effect of being able to recognize the operational state of the air conditioner body immediately before being operated can be achieved.

### Industrial Applicability

As described in the foregoing, the air conditioning unit and the remote controller according to the present invention are useful in operating a plurality of air conditioning units with a plurality of remote controllers. The present invention is particularly suitable as an air conditioning system configured such that only one of a plurality of air conditioner bodies is registered in a remote controller as a main machine while at least one of remaining air conditioner bodies is registered in the remote controller as a sub machine.

### Reference Signs List

10 Air conditioning system
12A, 12B, 12C Air conditioning unit (indoor unit)
14A, 14B, 14C Remote controller
16A, 16B, 16C Transmitting/receiving unit (air conditioning unit side)
20A, 20B, 20C LED display unit
22A, 22B, 22C Operation unit (air conditioning unit side)
24A, 24B, 24C Control unit (air conditioning unit side, pairing-setting unit)
26A, 26B, 26C LED for main machine
28A, 28B, 28C LED for sub machine
30A, 30B, 30C Transmitting/receiving unit (remote controller side)
34A, 34B, 34C Liquid crystal display unit
36A, 36B, 36C Operation unit (remote controller side)
38A, 38B, 38C Control unit (remote controller side, pairing-setting unit)
40A, 40B, 40C Information button (Operation information confirmation button)
42A, 42B, 42C Start/stop button
44A, 44B, 44C Enter button

## Claims

1. An air conditioning system (10), comprising:
- three or more air conditioner bodies (12A, 12B, 12C) that perform air-conditioning operation;
- three or more remote controllers (14A, 14B, 14C) that operate each of the air conditioner bodies; and
- a pairing-setting unit (24A, 24B, 24C) that pairs each of the plurality of air conditioner bodies and each of the remote controllers (14A, 14B, 14C), wherein
- the pairing-setting unit (24A, 24B, 24C) has a main machine registration function that registers a pair of the air conditioner body and the remote controller (14A, 14B, 14C), out of the conditioner bodies (12A, 12B, 12C) and the remote controllers (14A, 14B, 14C), as a main machine, and a sub machine registration function that registers the air conditioner body, which is registered as a main machine out of the air conditioner bodies, and a remote controller (14A, 14B, 14C) which is not registered as the main machine, as a sub machine,
- a mode of operating the air conditioner body that is the main machine with the remote controller (14A, 14B, 14C) after registration of the main machine and the sub machine by the pairing-setting unit (24A, 24B, 24C) is defined as a main-machine operation mode, while a mode of operating the air conditioner body that is the sub machine with the remote controller (14A, 14B, 14C) is defined as a sub-machine operation mode, and
**characterized in that**
when the main-machine operation mode is shifted to the sub-machine operation mode, the remote controller (14A, 14B, 14C) receives operation information transmitted from at least two of the air conditioner bodies registered as the sub machine so as to acquire the operation information of at least two of the air conditioner bodies registered as the sub machine, and displays the acquired operation information on a display unit (34A, 34B, 34C) of the remote controller (14A, 14B, 14C).

2. The air conditioning system according to claim 1, wherein in the sub-machine operation mode, each of the remote controllers (14A, 14B, 14C) can operate one arbitrary sub machine or can collectively operate all the apparatus bodies registered as the sub machine.

3. The air conditioning system according to claim 1 or 2, wherein each of the air conditioner bodies includes a display unit (20A, 20B, 20C) to be turned on when each of the air conditioner bodies is operated with the remote controller (14A, 14B, 14C) that is set as the sub machine.

4. A remote controller (14A, 14B, 14C) comprising:
- a pairing-setting unit (24A, 24B, 24C) that pairs the remote controller (14A, 14B, 14C) with three or more air conditioner bodies (12A, 12B, 12C) to operate each of the air conditioner bodies, wherein
- the pairing-setting unit (24A, 24B, 24C) has a main machine registration function that registers a pair of the air conditioner body and the remote controller (14A, 14B, 14C), out of the air conditioner bodies (12A, 12B, 12C) and three or more remote controllers, as a main machine, and a sub machine registration function that registers the air conditioner body, which is registered as a main machine out of the air conditioner bodies (12A, 12B, 12C), and the remote controller (14A, 14B, 14C), which is not registered as the main machine, as a sub machine, and
**characterized in that**
when a screen is shifted to a setting screen for setting at least two of the air conditioner bodies registered by the sub machine registration function, the remote controller (14A, 14B, 14C) receives operation information transmitted from each of the air conditioner bodies registered by the sub machine registration function so as to acquire the operation information of the air conditioner bodies registered by the sub machine registration function, and displays the acquired operation information on a display unit (34A, 34B, 34C) of the remoter controller.

## Patentansprüche

1. Klimatisierungssystem (10), umfassend:
- drei oder mehr Klimaanlagenkörper (12A, 12B, 12C), die Klimatisierungsoperation ausführen,
- drei oder mehr Fernsteuerungen (14A, 14B, 14C), die jeden der Klimaanlagenkörper betreiben, und
- eine Paarungseinstelleinheit (24A, 24B, 24C), die jeden der mehreren Klimaanlagenkörper und jede der Fernsteuerungen (14A, 14B, 14C) paart, wobei
- die Paarungseinstelleinheit (24A, 24B, 24C) eine Hauptmaschinenregistrierungsfunktion hat, die ein Paar des Klimaanlagenkörpers und der Fernsteuereinheit (14A, 14B, 14C) aus den Klimaanlagenkörpern (12A, 12B, 12C) und den Fernsteuerungen (14A, 14B, 14C) als eine Hauptmaschine registriert, und eine Nebenmaschinenregistrierungsfunktion hat, die den Klimaanlagenkörper, der aus den Klimaanlagenkörpern als eine Hauptmaschine registriert ist, und eine Fernsteuereinheit (14A, 14B, 14C), die nicht als die Hauptmaschine registriert ist, als eine Nebenmaschine registriert,
- wobei ein Modus des Betreibens des Klimaanlagenkörpers, der die Hauptmaschine ist, mit der Fernsteuereinheit (14A, 14B, 14C) nach dem Registrieren der Hauptmaschine und der Nebenmaschine durch die Paarungseinstelleinheit (24A, 24B, 24C) als ein Hauptmaschinenbetriebsmodus definiert ist, während ein Modus des Betreibens des Klimaanlagenkörpers, der die Nebenmaschine ist, mit der Fernsteuereinheit (14A, 14B, 14C) als ein Nebenmaschinenbetriebsmodus definiert ist, und
**dadurch gekennzeichnet, dass**,
wenn der Hauptmaschinenbetriebsmodus zu dem Nebenmaschinenbetriebsmodus umgeschaltet wird, die Fernsteuereinheit (14A, 14B, 14C) Operationsinformationen, die von mindestens zwei der Klimaanlagenkörper gesendet wurden, die als die Nebenmaschine registriert sind, empfängt, um die Operationsinformationen von mindestens zwei der Klimaanlagenkörper, die als die Nebenmaschine registriert sind, zu erfassen, und die erfassten Operationsinformationen auf einer Anzeigeeinheit (34A, 34B, 34C) der Fernsteuereinheit (14A, 14B, 14C) anzeigt.

2. Klimatisierungssystem nach Anspruch 1, wobei in dem Nebenmaschinenbetriebsmodus jede der Fernsteuerungen (14A, 14B, 14C) eine beliebige Nebenmaschine betreiben kann oder alle Vorrichtungskörper, die als die Nebenmaschine registriert sind, gemeinsam betreiben kann.

3. Klimatisierungssystem nach Anspruch 1 oder 2, wobei jeder der Klimaanlagenkörper eine Anzeigeeinheit (20A, 20B, 20C) enthält, die einzuschalten ist, wenn jeder der Klimaanlagenkörper mit der Fernsteuereinheit (14A, 14B, 14C) betrieben wird, die als die Nebenmaschine eingestellt wurde.

4. Fernsteuereinheit (14A, 14B, 14C), umfassend:
- eine Paarungseinstelleinheit (24A, 24B, 24C), die die Fernsteuereinheit (14A, 14B, 14C) mit drei oder mehr Klimaanlagenkörpern (12A, 12B, 12C) paart, um jeden der Klimaanlagenkörper zu betreiben, wobei
- die Paarungseinstelleinheit (24A, 24B, 24C) eine Hauptmaschinenregistrierungsfunktion hat, die ein Paar des Klimaanlagenkörpers und der Fernsteuereinheit (14A, 14B, 14C) aus den Klimaanlagenkörpern (12A, 12B, 12C) und drei oder mehr Fernsteuerungen als eine Hauptmaschine registriert, und eine Nebenmaschinenregistrierungsfunktion hat, die den Klimaanlagenkörper, der aus den Klimaanlagenkörpern (12A, 12B, 12C) als eine Hauptmaschine registriert ist, und die Fernsteuereinheit (14A, 14B, 14C), die nicht als die Hauptmaschine registriert ist, als eine Nebenmaschine registriert, und
**dadurch gekennzeichnet, dass**,
wenn ein Bildschirm zu einem Einstellbildschirm zum Einstellen von mindestens zwei der Klimaanlagenkörper, die durch die Nebenmaschinenregistrierungsfunktion registriert sind, umgeschaltet wird, die Fernsteuereinheit (14A, 14B, 14C) Operationsinformationen empfängt, die von jedem der Klimaanlagenkörper gesendet wurden, die durch die Nebenmaschinenregistrierungsfunktion registriert sind, um die Operationsinformationen der Klimaanlagenkörper, die durch den Nebenmaschinenregistrierungsfunktion registriert sind, zu erfassen, und die erfassten Operationsinformationen auf einer Anzeigeeinheit (34A, 34B, 34C) der Fernbedienung anzeigt.

## Revendications

1. Système de climatisation (10), comprenant :
- trois corps de climatiseur (12A, 12B, 12C) ou plus qui effectuent une opération de climatisation ;
- trois télécommandes (14A, 14B, 14C) ou plus qui mettent en oeuvre chacun des corps de climatiseur ; et
- une unité d'établissement d'appariement (24A, 24B, 24C) qui apparie chacun de la pluralité de corps de climatiseur et chacune des télécommandes (14A, 14B, 14C), dans lequel
- l'unité d'établissement d'appariement (24A, 24B, 24C) a une fonction d'enregistrement de machine principale qui enregistre une paire du corps de climatiseur et de la télécommande (14A, 14B, 14C), parmi les corps de climatiseur (12A, 12B, 12C) et les télécommandes (14A, 14B, 14C), en tant que machine principale, et une fonction d'enregistrement de machine secondaire qui enregistre le corps de climatiseur, qui est enregistré en tant que machine principale parmi les corps de climatiseur, et une télécommande (14A, 14B, 14C) qui n'est pas enregistrée en tant que machine principale, en tant que machine secondaire,
- un mode de mise en oeuvre du corps de climatiseur qui est la machine principale avec la télécommande (14A, 14B, 14C) après l'enregistrement de la machine principale et de la machine secondaire par l'unité d'établissement d'appariement (24A, 24B, 24C) est défini en tant que mode de fonctionnement de machine principale, tandis qu'un mode de mise en oeuvre du corps de climatiseur qui est la machine secondaire avec la télécommande (14A, 14B, 14C) est défini en tant que mode de fonctionnement de machine secondaire, et
**caractérisé en ce que**
lors du passage du mode de fonctionnement de machine principale au mode de fonctionnement de machine secondaire, la télécommande (14A, 14B, 14C) reçoit des informations de fonctionnement transmises par au moins deux des corps de climatiseur enregistrés en tant que machine secondaire de manière à acquérir les informations de fonctionnement d'au moins deux des corps de climatiseur enregistrés en tant que machine secondaire, et affiche les informations de fonctionnement acquises sur une unité d'affichage (34A, 34B, 34C) de la télécommande (14A, 14B, 14C).

2. Système de climatisation selon la revendication 1, dans lequel, dans le mode de fonctionnement de machine secondaire, chacune des télécommandes (14A, 14B, 14C) peut mettre en oeuvre une machine secondaire arbitraire ou peut mettre en oeuvre collectivement tous les corps d'appareil enregistrés en tant que machine secondaire.

3. Système de climatisation selon la revendication 1 ou 2, dans lequel chacun des corps de climatiseur comprend une unité d'affichage (20A, 20B, 20C) à activer lorsque chacun des corps de climatiseur est mis en oeuvre avec la télécommande (14A, 14B, 14C) qui est établie en tant que machine secondaire.

4. Télécommande (14A, 14B, 14C) comprenant :
- une unité d'établissement d'appariement (24A, 24B, 24C) qui apparie la télécommande (14A, 14B, 14C) avec trois corps de climatiseur (12A, 12B, 12C) ou plus pour mettre en oeuvre chacun des corps de climatiseur, dans lequel
- l'unité d'établissement d'appariement (24A, 24B, 24C) a une fonction d'enregistrement de machine principale qui enregistre une paire du corps de climatiseur et de la télécommande (14A, 14B, 14C), parmi les corps de climatiseur (12A, 12B, 12C) et trois télécommandes ou plus, en tant que machine principale, et une fonction d'enregistrement de machine secondaire qui enregistre le corps de climatiseur, qui est enregistré en tant que machine principale parmi les corps de climatiseur (12A, 12B, 12C), et la télécommande (14A, 14B, 14C), qui n'est pas enregistrée en tant que machine principale, en tant que machine secondaire, et
**caractérisé en ce que**
lors du passage d'un écran à un écran d'établissement pour établir au moins deux des corps de climatiseur enregistrés par la fonction d'enregistrement de machine secondaire, la télécommande (14A, 14B, 14C) reçoit des informations de fonctionnement transmises par chacun des corps de climatiseur enregistrés par la fonction d'enregistrement de machine secondaire de manière à acquérir les informations de fonctionnement des corps de climatiseur enregistrés par la fonction d'enregistrement de machine secondaire, et affiche les informations de fonctionnement acquises sur une unité d'affichage (34A, 34B, 34C) de la télécommande.
